Europäisches Patentamt

European Patent Office

Office européen des brevets

(11) Veröffentlichungsnummer: **0 405 290 A1**

(12) **EUROPÄISCHE PATENTANMELDUNG**

(21) Anmeldenummer: 90111510.5

(22) Anmeldetag: 19.06.90

(51) Int. Cl.⁵: **B01D 53/34**

(30) Priorität: 30.06.89 DE 3921578

(43) Veröffentlichungstag der Anmeldung:
02.01.91 Patentblatt 91/01

(84) Benannte Vertragsstaaten:
AT BE CH DE DK ES FR GB IT LI NL SE

(71) Anmelder: RHEINBRAUN Aktiengesellschaft
Stüttgenweg 2
D-5000 Köln 41(DE)

Anmelder: LENTJES AKTIENGESELLSCHAFT
Hansa-Allee 305
D-4000 Düsseldorf-Oberkassel(DE)

Anmelder: NEKAMI-MAASGROEVEN B.V.
Nijverheidsstraat 32
NL-2800 AK Gouda(NL)

(72) Erfinder: Ritter, Günter, Dr.-Ing.
Goethestrasse 29
D-5040 Brühl(DE)
Erfinder: Evertz, Erich, Dr.-Ing.
Steppenbergallee 230
D-5100 Aachen(DE)
Erfinder: Goethart, Jan Carel Theodoor de
Fielliettaz
Bachlaan 13
NL-1217 BT Hilversum(NL)

(74) Vertreter: Koepsell, Helmut, Dipl.-Ing.
Mittelstrasse 7
D-5000 Köln 1(DE)

(54) Verfahren und Einrichtung zum Reinigen von mit Schadstoffen beladenem Rauchgas aus Verbrennungsanlagen.

(57) Die Erfindung betrifft ein Verfahren und eine Einrichtung zur Reinigung von Rauchgasen, die mit Schadstoffen beladen sind. Dazu wird das Rauchgas durch einen ersten Reaktionsbereich geführt, in welchem es mit basischen, insbesondere calciumhaltigen Substanzen in feinverteilter Form in Berührung gebracht wird. Aus dem ersten Reaktionsbereich gelangt das Rauchgas in einen zweiten Reaktionsbereich, in welchem es im Flugstrom mit kohlenstoffhaltigen Substanzen in Berührung gebracht wird der-art, daß die kohlenstoffhaltigen Substanzen im Rauchgas noch vorhandene Schadstoffe, insbesondere Schwermetalle, Dioxine und Furane adsorptiv entfernen. Die mit den Schadstoffen beladenen kohlenstoffhaltigen Substanzen werden in wenigstens zwei Fraktionen unterschiedlicher Korngrößenbereichen unterteilt, wobei zumindest Teile der gröberen Fraktionen in den Verbrennungsraum und/oder einen der Reaktionsbereiche zurückgeführt werden.

FIG.1

# VERFAHREN UND EINRICHTUNG ZUM REINIGEN VON MIT SCHADSTOFFEN BELADENEM RAUCHGAS AUS VERBRENNUNGSANLAGEN

Die Erfindung berifft ein Verfahren und eine Einrichtung zum Reinigen von mit Schadstoffen beladenem Rauchgas aus Verbrennungsanlagen, insbesondere Müll-Verbrennungsanlagen, wobei die ggf. im Rauchgas vorhandene Flugasche abgeschieden und das Rauchgas durch einen ersten Reaktionsbereich geleitet wird, in welchem es mit basischen, im allgemeinen calciumhaltigen Substanzen, z. B. Calciumhydroxid ($Ca(OH)_2$) und/oder Kalkstein ($CaCO_3$) und/oder Calciumoxid (CaO) in feinverteiler Form naß, quasi-trocken oder trocken in innige Berührung gebracht wird, wobei Schadstoffe, z. B. Schwefeldioxid ($SO_2$), Chlorwasserstoff (HCl) und Fluorwasserstoff (HF) zumindest teilweise aus dem Rauchgas entfernt und in den calciumhaltigen Substanzen eingebunden werden und das Rauchgas durch einen zweiten Reaktionsbereich geleitet und dort mit kohlenstoffhaltigen Substanzen, z. B. Aktivkohle oder Koks, zur Entfernung wenigstens eines Teils der restlichen Schadstoffe, insbesondere der Schwermetalle, in Berührung gebracht wird und die mit Schadstoffen beladenen calciumhaltigen Substanzen aus dem Rauchgas entfernt werden.

Aus der EP-A-0 283 721 / 88102412.9 sind bereits ein Verfahren und eine Einrichtung bekannt, bei denen mehrstufig gearbeitet wird derart, daß in einem ersten Reaktionsbereich unter Verwendung basischer Substanzen, insbesondere calciumhaltiger Substanzen, Schwefeloxide gebunden werden. Diesem ersten Reaktionsbereich sind mit Koks oder dgl. gefüllte Filter nachge schaltet, die der Abscheidung der Schwermetalle, Dioxine und Furane sowie des restlichen $SO_2$, HCl usw. dienen. Diese Filter sind als Festbetten ausgebildet mit der Folge, daß dazu erhebliche Koksmengen benötigt werden. Zudem ist es bei Verwendung von Festbetten im allgemeinen erforderlich, eine gröbere Korngröße zu verwenden, um eine Mindestdurchlässigkeit des Bettes zu gewährleisten. Dies hat zur Folge, daß der Koks - oder eine andere kohlenstoffhaltige Substanz - verhältnismäßig langsam mit den Schadstoffen beladen wird, wobei zudem die Adsorptionskapazität des Kokses nicht immer voll ausgenutzt werden kann.

Außerdem sind aus DE-A-3 318 880 und DE-A-3 610 942 Verfahren und Einrichtungen bekannt, bei denen zum Reinigen von Rauchgasen calciumhaltige Substanzen verwendet werden, die im wesentlichen dazu dienen, $SO_2$ und ähnliche Schadstoffe aus dem Rauchgas zu entfernen. Schwermetalle, Dioxine und Furane als Bestandteile von Rauchgasen werden in diesen Vorveröffentlichungen nicht erwähnt.

Die Erfindung geht aus von einem Verfahren und einer Einrichtung der einleitend beschriebenen Art. Ihr liegt die Aufgabe zugrunde, diese gegenüber dem Anmeldungsgegenstand der EP-A-0 283 721 / 88102412.9 insbesondere so zu verbessern, daß kleinere Mengen an Koks oder anderer kohlenstoffhaltigen Substanzen ausreichen, um den gewünschten Reinigungseffekt zu erzielen. Ferner wird angestrebt, die Menge an mit den Schadstoffen beladenem Koks oder dgl., die deponiert oder in anderer Weise entsorgt werden muß, so gering wie möglich zu halten. Dabei soll insbesondere berücksichtigt werden, daß Schwermetalle, insbesondere Quecksilber, jedenfalls bei trockenen oder quasitrockenen Verfahren überwiegend durch Adsorption an kohlenstoffhaltigen Substanzen aus dem Rauchgas entfernt werden können, wobei eine Rückführung des gesamten mit Schwermetall beladenen Kokses in die Feuerung nicht möglich ist, da sonst eine zunehmende Anreicherung des Rauchgases mit Schwermetall eintreten würde.

Zur Lösung dieser Aufgabe schlägt die Erfindung vor, daß die· Berührung zwischen dem zu reinigenden Rauchgas und den kohlenstoffhaltigen Substanzen innerhalb des zweiten Reaktionsbereiches im Flugstrom erfolgt und danach wenigstens die kohlenstoffhaltigen Substanzen aus dem Rauchgas abgeschieden und in wenigstens zwei Fraktionen unterteilt werden und zumindest Teile der gröberen Fraktion in den Verbrennungsraum und/oder in einen der Reaktionsbereiche züruckgeführt werden.

Die Rauchgasreinigung unter Verwendung von kohlenstoffhaltigen Substanzen im Flugstrom-Verfahren bietet gegenüber der Anwendung von Festbetten erhebliche Vorteile. So können im Flugstromverfahren staubförmige Feststoffe, also beispielsweise Koks, verwendet werden, die eine Korngröße von z. B. maximal etwa 0,5 mm aufweisen. Dadurch werden günstigere Bedingungen hinsichtlich der Korndiffusion erreicht, die zu einer höheren Geschwindigkeit führen, mit denen das einzelne Korn mit den Schadstoffen beladen wird. Diese höhere Beladegeschwindigkeit wird auch zusätzlich dadurch begünstigt, daß im Flugstrom-Verfahren eine größere Relativgeschwindigkeit zwischen Rauchgas und den einzelnen Kohlenstoffpartikeln vorhanden ist. Diese größere Relativgeschwindigkeit ist vor allem darauf zurückzuführen, daß das Rauchgas bei Anwendung des Flugstrom-Verfahrens eine wesentlich höhere Geschwindigkeit als beim Durchströmen eines Festbettes aufweist. Die Geschwindigkeit bei Anwendung des Flugstrom-Verfahrens liegt in der Größenordnung von z. B. 10 - 20 m/sec. Aufgrund dieser Gegebenheiten ist es bei Anwendung des Flugstrom-Verfahrens möglich, mit wesentlich kleineren Aggregaten und mit wesentlich kleineren Koksmengen als beim Festbett-Verfahren auszukommen. Darüber hinaus führen die Unterteilung der aus dem Rauchgas hinter dem zweiten Reaktionsbereich abgeschiedenen Feststoffe in eine gröbere und eine feinere Fraktion und die Rückführung der gröberen Fraktion zu einer besseren Ausnutzung des kohlenstoffhaltigen Adsorptionsmittels. Durch die Rückführung der gröberen Fraktion in den Verbrennungsraum und Verbrennen derselben wird erreicht, daß die Schadstoffe, soweit sie nicht bereits im ersten Reaktionsbereich abgeschieden werden, sich mit hoher Konzentration an den Körnern der feineren Fraktion ablagern mit dem Ergebnis, daß aufgrund der so erzielten hohen Beladung der feinen Fraktion die Menge des mit den Schadstoffen beladenen Kokses, der zu entsorgen, beispielsweise auf einer Deponie unterzubringen ist, relativ klein bleibt.

Im allgemeinen wird die Temperatur des Rauchgases während der Entfernung der Schadstoffe etwa 100 - 200° C betragen.

Weiterhin kann so verfahren werden, daß die Unterteilung wenigstens der kohlenstoffhaltigen Substanzen in wenigstens zwei Fraktionen dadurch erfolgt, daß die Abscheidung dieser Substanzen aus dem Rauchgas in Abhängigkeit von deren Korngröße durchgeführt wird. Diese Art der Verfahrensführung hat den Vorteil, daß es nicht erforderlich ist, die aus dem Rauchgas abgeschiedenen festen Substanzen noch zusätzlich irgendwelchen Klassiervorgängen zu unterziehen, um sie in die jeweils gewünschten Fraktionen zu unterteilen.

Bei Anwendung eines trockenen oder quasi-trockenen Verfahrens im ersten Reaktionsbereich können die basischen Substanzen, die dem ersten Reaktionsbereich zugeführt werden bzw. die Umsetzungsprodukte dieser basischen Substanzen auch durch den zweiten Reaktionsbereich geführt werden, so daß sie mit wenigstens einem Teil der kohlenstoffhaltigen Substanzen gemeinsam aus dem Rauchgasstrom abgeschieden werden. Aufgrund der Tatsache, daß die basischen Substanzen ganz überwiegend eine wesentlich kleinere Korngröße aufweisen als die kohlenstoffhaltigen Substanzen, werden die basischen Substanzen in diesem Fall zum weitaus größten Teil mit der feinkörnigen Fraktion der kohlenstoffhaltigen Substanzen aus dem Rauchgas entfernt werden, so daß die Grobfraktion der nach dem zweiten Reaktionsbereich abgeschiedenen Feststoffe im wesentlichen kohlenstoffhaltige Substanzen, also beispielsweise Koks, enthält. Im allgemeinen wird, jedenfalls bei Anwendung eines trockenen oder quasi-trockenen Verfahrens im ersten Reaktionsbereich, die Korngröße der basischen Substanzen eine Größenordnung von 5 - 10 μm nicht oder nur wenig überschreiten.

Es ist aber auch möglich, das Verfahren so durchzuführen, daß die basischen Substanzen in Strömungsrichtung des Rauchgases vor dem Reaktionsbereich, in welchem dem Rauchgas frische, kohlenstoffhaltige Substanzen zugesetzt werden, zumindest teilweise abgeschieden werden. Dies würde normalerweise bedeuten, daß das Abscheiden der basischen Substanzen bzw. der Umsetzungsprodukte derselben zwischen den beiden Reaktionsbereichen erfolgt.

Unabhängig davon, ob die basischen Substanzen oder zumindest der überwiegende Teil derselben bereits vorher aus dem Rauchgas abgeschieden werden oder ob die basischen Substanzen bzw. deren Umsetzungsprodukte auch noch den zweiten Reaktionsbereich passieren, können gemäß einem weiteren Vorschlag der Erfindung die Bestandteile der gröberen Fraktion der in Strömungsrichtung hinter dem zweiten Reaktionsbereich abgeschiedenen Substanzen zumindest teilweise in den zweiten Reaktionsbereich zurückgeführt werden. Darüber hinaus ist es möglich, die Bestandteile der feineren Fraktion der in Strömungsrichtung hinter dem zweiten Reaktionsbereich abgeschiedenen Substanzen zumindest teilweise in den ersten und/oder in den zweiten Reaktionsbereich zurückzuführen. Dies dient dazu, eine möglichst hohe Beladung bzw. weitgehende Umsetzung der Substanzen zu bewirken, bevor sie aus dem System herausgeführt und beispielsweise deponiert werden. Eine Rückführung wenigstens eines Teils der vorhandenen Fraktion in den ersten Reaktionsbereich wird insbesondere dann in Betracht kommen, wenn die basischen Substanzen bzw. deren Umsetzungsprodukte erst nach dem zweiten Reaktionsbereich aus dem Rauchgas abgeschieden werden.

Die Erfindung betrifft weiterhin eine Einrichtung zur Reinigung von Schadstoffe enthaltendem Rauchgas aus Verbrennungsanlagen mit einem Elektrofilter zur Abscheidung von Flugasche, einem in Strömungsrichtung dahinter angordneten ersten Reaktorbereich, der mit basischen Substanzen in feinverteilter Form naß oder trocken beschickt wird, und einem in Strömungsrichtung des Rauchgases dahinter angeordneten zweiten Reaktorbereich, der mit einer kohlenstoffhaltigen Substanz, insbesondere Koks, beschickt wird. Die Erfindung schlägt vor, den zweiten Reaktorbereich als Flugstromreaktor auszubilden und in Strömungsrichtung des Rauchgases hinter dem zweiten Reaktorbereich hintereinander wenigstens zwei Abscheider anzuordnen, in denen die im Rauchgas befindlichen festen Substanzen in Abhängigkeit von ihrer Korngröße abgeschieden werden derart, daß zunächst die gröberen Partikel und danach die feineren Partikel aus dem Rauchgas abgetrennt werden. Dabei kann der Abscheider für die gröberen Partikel als Zyklon, der Abscheider für die feineren Partikel als Elektrofilter oder als Tuchfilter ausgebildet sein. Letzterer hat den Vorteil, daß sich auf dem Filtergewebe eine Schicht aus den abgeschiedenen feinen Substanzen bildet, durch die das Rauchgas hindurchströmen muß, so daß diese Schicht einen zusätzlichen Filter bildet, der im Rauchgas eventuell noch vorhandene Restbestandteile an Schadstoffen bindet.

Die beiden Reaktorbereiche können auch zu einer Baueinheit zusammengefaßt sein.

In der Zeichnung sind die Fließbilder zweier Ausführungsbeispiele dargestellt.

In beiden Ausführungsbeispielen ist jeweils ein Kessel 1 vorgesehen, in welchem Müll 2 verbrannt wird. Dabei entstehen grobe Asche 3 und Rauchgas 4. Die grobe Asche 3 wird aus dem Kessel getrennt vom Rauchgas entfernt. Das Rauchgas 4, welches viele Schadstoffe enthält, wird zunächst durch einen Elektrofilter 5 geführt, in welchem Flugasche 6 abgeschieden wird. Das entstaubte Rauchgas 7 wird, gegebenenfalls unter Zwischenschaltung von Wärmetauschern, die in der Zeichnung nicht dargestellt sind, einem ersten Reaktorbereich 8 zugeführt, in welchem calciumhaltige Substanzen, z. B. Calciumhydroxid ($Ca(OH)_2$) oder Kalkstein ($CaCO_3$) oder Calciumoxid ($CaO$) allein oder in Mischung in das Rauchgas 7 eingegeben werden. Diese basischen Substanzen 9 können naß oder trocken, jedenfalls in feinverteilter Form in den Reaktor 8 eingesprüht oder eingeblasen und darin mit dem entstaubten Rauchgas 7 verwirbelt werden. Zur innigen Vermischung des Rauchgases 7 mit der basischen Substanz 9 sind in dem Reaktorbereich 8 Einbauten 10 vorhanden, die zu einer mehrfachen Umlenkung des Rauchgases 7 führen.

Bei der Behandlung des Rauchgases 7 mit der calciumhaltigen Substanz 9 im Reaktorbereich 8 werden insbesondere die Schadstoffe Schwefeldioxid ($SO_2$), Chlorwasserstoff ($HCl$) und Fluorwasserstoff ($HF$) zum überwiegenden Teil, d.h. bis auf geringe Reste, aus dem Rauchgas 7 entfernt und in der calciumhaltigen Substanz 9 eingebunden. Die dabei ablaufenden Umsetzungen sind bekannt. Sie brauchen nicht besonders erläutert zu werden. Aus dem Reaktorbereich 8 tritt ein von den vorgenannten Schadstoffen weitgehend befreites Rauchgas 11 aus, in welchem sich die Umsetzungsprodukte der basischen Substanz 9 und nicht umgesetzte Teile dieser Substanz befinden.

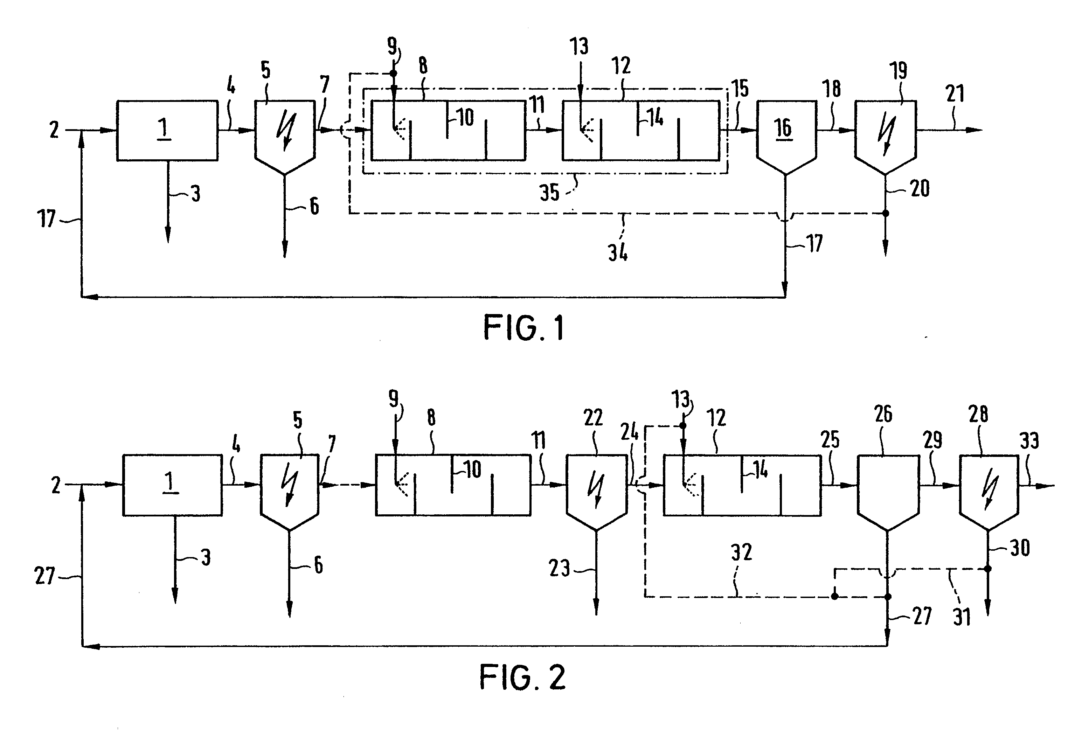

Beim Ausführungsbeispiel gemäß Fig. 1 tritt dieses Gemisch aus Rauchgas 11 und den vorstehend beschriebenen festen Substanzen in einen zweiten Reaktorbereich 12 ein, dem eine staubförmige, kohlenstoffhaltige Substanz 13, beispielsweise Koks trocken zugeführt wird. Dies kann in der Weise geschehen, daß die staubförmige kohlenstoffhaltige Substanz 13 in das Rauchgas 11 eingeblasen wird. Der zweite Reaktorbereich 12 ist ebenfalls mit Einbauten 14 versehen, durch die das Rauchgas 11 mehrfach umgelenkt wird. Dies dient einer innigen Vermischung von Rauchgas 11 und kohlenstoffhaltigen Substanzen 13 und auch der Erhöhung der Relativgeschwindigkeit zwischen Rauchgas und den Partikeln der festen kohlenstoffhaltigen Substanzen.

Im zweiten Reaktorbereich 12 findet eine adsorptive Anlagerung der restlichen Bestandteile an $SO_2$, $HCl$ und $HF$ an den kohlenstoffhaltigen Substanzen 13 statt. Außerdem werden im Reaktorbereich 12 auch organische Verbindungen, insbesondere Dioxine und Furane, sowie Schwermetalle adsorptiv an der kohlenstoffhaltigen Substanz 13 angelagert.

Beim Ausführungsbeispiel gemäß Fig. 1 verläßt demzufolge ein Gemisch 15 den zweiten Reaktorbereich 12, welches aus dem weitgehend gereinigten Rauchgas 11 und den festen Substanzen besteht, bei denen es sich um die mit Schadstoffen beladenen kohlenstoffhaltigen Substanzen 13 sowie um die Umsetzungsprodukte der basischen, im allgemeinen calciumhaltigen Substanz 9 sowie um Reste dieser basischen Substanz 9, die nicht umgesetzt worden sind, handelt. Dieses Gemisch 15 wird in einen Zyklonabscheider 16 geführt, in welchem die gröberen Partikel der Feststoffe aus dem Rauchgas 15 abgeschieden und als gröbere Fraktion 17 aus dem Zyklon 16 herausgeführt werden. Das weitgehend schadstofffreie und von den größeren Feststoffpartikeln 17 befreite Rauchgas 18, welches jedoch noch Anteile an feinen, staubförmigen Partikeln enthält, wird in einen Elektrofilter oder einen Tuchfilter 19 geführt, in welchem das Abscheiden der feinen Feststoffpartikel aus dem Rauchgas 18 erfolgt. Diese feinen Feststoffpartikel werden als feine Feststofffraktion 20 aus dem Filter 19 entfernt. Das weitgehend gereinigte und entstaubte Rauchgas 21 wird über einen Kamin an die Atmosphäre abgegeben.

Der feine Staub 20 kann auf eine Deponie gegeben werden. Es hat sich jedoch als zweckmäßig herausgestellt, zur Erzielung einer größtmöglichen Beladung insbesondere der kohlenstoffhaltigen Substanz mit Schadstoffen einen Teil der feinen Fraktion 20 zurückzuführen. So kann gemäß dem Ausführungsbeispiel der Fig. 1 ein Teil 34 der feinen Fraktion 20 in den ersten Reaktorbereich 8 zurückgeführt und dort gegebenenfalls zusammen mit der frischen, basischen Substanz in den ersten Reaktorbereich 8 eingeblasen werden. Die im Zyklon 16 aus dem Rauchgas 15 abgetrennte grobe Fraktion 17 wird beim Ausführungsbeispiel gemäß Fig. 1 in den Verbrennungsraum 1 zurückgeführt und zusammen mit dem Müll 2 verbrannt.

Die beiden Reaktorbereiche 8 und 12 können in gleicher oder ähnlicher Weise ausgebildet sein, so daß sie auch zu einer Baueinheit 35 zusammengefaßt sein können, wie dies strichpunktiert in Fig. 1 der Zeichnung angedeutet ist.

Da der für die Abscheidung der Grobfraktion 17 vorgesehene Zyklon 16 im allgemeinen auch einen Teil der feinen Feststoffe aus dem Rauchgas abtrennen wird, kann unterhalb des Zyklonabscheiders 16 ein Feinsieb angeordnet sein, mit welchem aus der Grobfraktion 17 noch die feinen Partikel ausgesiebt werden, um deponiert oder gegebenenfalls auch rückgeführt zu werden. Dieses Sieb ist in der Zeichnung nicht dargestellt.

Beim Ausführungsbeispiel gemäß Fig. 2 passiert das Rauchgas 11 nach Verlassen des ersten Reaktorbereiches 8 zunächst einen Elektrofilter 22. In diesem werden die basischen Substanzen bzw. dere Umsetzungsprodukte 23 abgeschieden und beispielsweise auf eine Deponie gegeben. Das von den Produkten 23 zu mindest weitgehend befreite Rauchgas 24 tritt danach in den zweiten Reaktorbereich 12 ein, in welchem es, wie bereits im Zusammenhang mit Fig. 1 beschrieben, mit einer kohlenstoffhaltigen Substanz 13 behandelt wird, die in den zweiten Reaktorbereich 12 eingeblasen wird. Den Reaktor 12 verläßt ein Gemisch 25 aus weitgehend gereinigtem Rauchgas und mit den Schadstoffen beladener kohlenstoffhaltiger Substanz. Dieses Gemisch 25 wird in den Zyklonabscheider 26 eingeführt, in welchem die gröberen Partikel 27 der Feststoffe aus dem Rauchgas entfernt werden. Die aus diesen gröberen Partikeln gebildete Fraktion 27 wird zumindest überwieged in den Kessel 1 zurückgeführt und dort zusammen mit dem Müll 2 verbrannt. Das von den grobkörnigen Feststoffen 27 gereinigte Rauchgas 29, welches noch die feinkörnigen Feststoffe enthält, wird in den Elektrofilter oder Tuchfilter 28 geführt, in welchem die feinen Partikel 30 aus dem Rauchgas 29 abgeschieden werden. Wenigstens ein Teil der feinen Fraktion 30 wird deponiert. Ein anderer Teil wird über eine Zweigleitung 31 zurückgeführt und der kohlenstoffhaltigen Substanz 13 zugefügt, welche in den zweiten Reaktorbereich 12 eingeblasen wird. Diese Maßnahme dient ebenfalls dazu, eine möglichst große Beladung mit Schadstoffen der Fraktion 30 aus den feinen Partikeln zu erzielen.

Da die aus den gröberen Partikeln bestehende Fraktion 27, die im Zyklonabscheider 26 aus dem Rauchgas 25 abgeschieden worden ist, in jedem Fall in viel geringerem Umfange mit Schadstoffen beladen ist als die Feinfraktion 30, wird die gröbere Fraktion 27 zumindest überwiegend in den Kessel 1 zurückgeführt und dort mit dem Müll 2 verbrannt. Es ist aber auch möglich, einen Teil der gröberen Fraktion über die Leitung 32 ebenfalls in den zweiten Reaktorbereich 12 zurückzuführen, um auch eine stärkere Beladung wenigstens eines Teils der Partikel der gröberen Fraktion 27 zu erzielen.

## Ansprüche

1. Verfahren zum Reinigen von mit Schadstoffen beladenem Rauchgas aus Verbrennungsanlagen, insbesondere Müllverbrennungsanlagen, bei welchem die gegebenenfalls vorhandene Flugasche aus dem Rauchgas abgeschieden und das Rauchgas durch einen ersten Reaktionsbereich geleitet wird, in welchem es mit basischen Substanzen, z. B. Calciumhydroxid ($Ca(OH)_2$) und/oder Kalkstein ($CaCO_3$) und/oder Calciumoxid ($CaO$) in feinverteilter Form naß oder trocken in innige Berührung gebracht wird, wobei Schadstoffe, z. B. Schwefeldioxid ($SO_2$), Chlorwasserstoff ($HCl$) und Fluorwasserstoff ($HF$), wenigstens teilweise aus dem Rauchgas entfernt und in den calciumhaltigen Substanzen eingebunden werden und das Rauchgas durch einen zweiten Reaktionsbereich geleitet und dort mit kohlenstoffhaltigen Substanzen, z. B. Aktivkohle oder Koks, zur Entfernung zumindest eines Teils der restlichen Schadstoffe, insbesondere der Schwermetalle, in Berührung gebracht wird und die mit Schadstoffen beladenen, basischen Substanzen aus dem Rauchgas entfernt werden, dadurch gekennzeichnet, daß die Berührung zwischen zu reinigendem Rauchgas und den kohlenstoffhaltigen Substanzen innerhalb des zweiten Reaktionsbereichs im Flugstrom erfolgt und danach wenigstens die festen kohlenstoffhaltigen Substanzen aus dem Rauchgas abgeschieden und in wenigstens zwei Fraktionen unterteilt werden und zumindest Teile der gröberen Fraktion in den Verbrennungsraum und/oder einen der Reaktionsbereiche zurückgeführt werden.

2. Verfahren nach Anspruch 1, dadurch gekennzeichnet, daß die frischen, kohlenstoffhaltigen Substanzen überwiegend in einer Korngröße von 0 - 0,5 mm verwendet werden.

3. Verfahren nach Anspruch 1, dadurch gekennzeichnet, daß die basischen Substanzen überwiegend in einer Korngröße von 0 - 10 $\mu$m verwendet werden.

4. Verfahren nach Anspruch 1, dadurch gekennzeichnet, daß das Rauchgas mit einer Geschwindigkeit von 10 - 20 m/sec. durch den zweiten Reaktionsbereich geleitet wird.

5. Verfahren nach Anspruch 1, dadurch gekennzeichnet, daß das Rauchgas bei einer Temperatur von 100 - 200° C behandelt wird.

6. Verfahren nach Anspruch 1, dadurch gekennzeichnet, daß wenigstens die kohlenstoffhaltigen Substanzen in wenigstens zwei nacheinander erfolgenden Schritten aus dem Rauchgas abgeschieden wird und im jeweils folgenden Schritt feinkörnigeres Material als im vorhergehenden Schritt abgeschieden wird.

7. Verfahren nach Anspruch 1, dadurch gekennzeichnet, daß die basischen Substanzen mit wenigstens einem Teil der kohlenstoffhaltigen Substanzen gemeinsam aus dem Rauchgas abgeschieden werden.

8. Verfahren nach Anspruch 1, dadurch gekennzeichnet, daß die basischen Substanzen in Strömungsrichtung des Rauchgases vor dem Reaktionsbereich, in welcher dem Rauchgas frische, kohlenstoffhaltige Substanzen zugesetzt werden, zumindest teilweise abgeschieden werden.

9. Verfahren nach Anspruch 1, dadurch gekennzeichnet, daß die Bestandteile der gröberen Fraktion der in Strömungsrichtung hinter dem zweiten Reaktionsbereich abgeschiedenen Substanzen zumindest teilweise in den zweiten Reaktionsbereich zurückgeführt werden.

10. Verfahren nach Anspruch 1, dadurch gekennzeichnet, daß die Bestandteile der feineren Fraktion der in Strömungsrichtung hinter dem zweiten Reaktionsbereich abgeschiedenen Substanzen zumindest teilweise in den ersten Reaktionsbereich zurückgeführt werden.

11. Verfahren nach Anspruch 1, dadurch gekennzeichnet, daß die Bestandteile der feineren Fraktion der in Strömungsrichtung hinter dem zweiten Reaktionsbereich abgeschiedenen Substanzen zumindest teilweise in den zweiten Reaktionsbereich zurückgeführt werden.

12. Einrichtung zur Reinigung von Schadstoffe enthaltendem Rauchgas aus Verbrennungsanlagen, insbesondere Müllverbrennungsanlagen, mit einem ersten Reaktorbereich, in den basische Substanzen in feinverteilter Form naß oder trocken eingeführt werden, und einem in Strömungsrichtung des Rauchgases dahinter angeordneten zweiten Reaktorbereich, in den kohlenstoffhaltige Substanzen, insbesondere Koks, in feinverteilter Form eingeführt werden, dadurch gekennzeichnet, daß der zweite Reaktorbereich (12) als Flugstromreaktor ausgebildet ist und im Anschluß an den zweiten Reaktorbereich (12) hintereinander wenigstens zwei Abscheider (16, 19; 26, 28) angeordnet sind, in denen die im Rauchgas (15; 25) befindlichen festen Substanzen in Abhängigkeit von ihrer Korngröße abgeschieden werden derart, daß zunächst die gröberen Feststoffpartikel (17; 27) und danach die feineren Feststoffpartikel (20; 30) abgetrennt werden, und daß von wenigstens einem (16; 26) dieser beiden Abscheider eine Leitung zum Verbrennungsraum (1) und/oder zu einem der beiden Reaktionsbereiche (9; 12) verläuft.

13. Einrichtung nach Anspruch 12, dadurch gekennzeichnet, daß der Abscheider für die gröberen Partikel als Zyklon (16; 26) und der Abscheider für die feineren Partikel als Elektrofilter (19; 28) oder Tuchfilter ausgebildet sind.

14. Vorrichtung nach Anspruch 12, dadurch gekennzeichnet, daß zwischen den beiden Reaktorbereichen (8; 12) ein Elektrofilter (22) angeordnet ist.

15. Einrichtung nach Anspruch 12, dadurch gekennzeichnet, daß vom Zyklon (26) eine Leitung (32) zum zweiten Reaktorbereich (12) geführt ist.

16. Einrichtung nach Anspruch 12, dadurch gekennzeichnet, daß vom Abscheider (28) für die feineren Partikel (30) eine Leitung (31) zum zweiten Reaktorbereich (12) geführt ist.

17. Einrichtung nach Anspruch 12, dadurch gekennzeichnet, daß vom Abscheider (19) für die feineren Partikel (20) eine Leitung (34) zum ersten Reaktorbereich (8) geführt ist.

18. Einrichtung nach einem der vorhergehenden Ansprüche 1 -17, dadurch gekennzeichnet, daß die beiden Reaktorbereiche (8; 12) zu einer Baueinheit (35) zusammengefaßt sind.

FIG. 1

FIG. 2

EP 0 405 290 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | EP-A-0 283 721 (RHEINISCHE BRAUNKOHLENWERKE AG)<br>* Anspruch 1; Spalte 6, Zeilen 51-59; Spalte 7, Zeilen 1-55; Figur *<br>--- | 1 | B 01 D 53/34 |
| Y | EP-A-0 253 563 (A/S NIRO ATOMIZER)<br>* Ansprüche 1-3,5; Seite 5, Zeilen 16-31; Figur 2 * | 1 | |
| A | | 2,5,13 | |
| | --- | | |
| A | DE-A-2 904 312 (BERGWERKSVERBAND GmbH)<br>* Anspruch 1 *<br>--- | 1,5 | |
| A | EP-A-0 193 135 (ANLAGENBAU mbH & CO. KG)<br>* Zusammenfassung; Figur 1 *<br>----- | 1,9,10 | |

| RECHERCHIERTE SACHGEBIETE (Int. Cl.5) |
|---|
| B 01 D |

Der vorliegende Recherchenbericht wurde für alle Patentansprüche erstellt

| Recherchenort | Abschlußdatum der Recherche | Prüfer |
|---|---|---|
| DEN HAAG | 08-10-1990 | CUBAS ALCARAZ J.L. |